# EUROPÄISCHE PATENTSCHRIFT

(11) **EP 1 651 917 B1**
(45) Veröffentlichungstag und Bekanntmachung des Hinweises auf die Patenterteilung: **21.03.2012**
(21) Anmeldenummer: 04740943.8
(22) Anmeldetag: 13.07.2004
(51) Int. Cl.: F26B 15/10, F26B 3/28, F26B 21/14, B65G 49/04

(54) **VORRICHTUNG ZUR AUSHÄRTUNG EINER AUS EINEM MATERIAL, DAS UNTER ELEKTROMAGNETISCHER STRAHLUNG AUSHÄRTET, INSBESONDERE AUS EINEM UV-LACK, ODER AUS EINEM THERMISCH AUSHÄRTENDEN LACK, BESTEHENDEN BESCHICHTUNG EINES GEGENSTANDES**
DEVICE FOR HARDENING AN OBJECT COATING WHICH IS MADE OF A MATERIAL HARDENING BY ELECTROMAGNETIC RADIATION ACTION, IN PARTICULAR UV-VARNISH OR THERMOHARDENING VARNISH
DISPOSITIF DE DURCISSEMENT D'UN REVETEMENT D'UN OBJET, CE REVETEMENT ETANT CONSTITUE D'UN MATERIAU DURCISSANT SOUS L'ACTION D'UN RAYONNEMENT ELECTROMAGNETIQUE, NOTAMMENT D'UNE PEINTURE UV OU D'UNE PEINTURE A DURCISSEMENT THERMIQUE

(30) Priorität: 24.07.2003 DE 10335005; 13.05.2004 DE 102004023536
(43) Veröffentlichungstag der Anmeldung: 03.05.2006
(73) Patentinhaber: Eisenmann AG, 71032 Böblingen (DE)
(72) Erfinder: SWOBODA, Werner, 71032 Böblingen (DE)
(74) Vertreter: Ostertag, Ulrich
(86) Internationale Anmeldenummer: PCT/EP2004/007696
(87) Internationale Veröffentlichungsnummer: WO 2005/012816

(56) Entgegenhaltungen:
- EP-A- 1 157 960
- WO-A-02/095311
- DD-A- 8 211
- DE-A- 4 033 333
- DE-A- 19 957 900
- FR-A- 1 048 715
- FR-A- 2 806 153
- US-A- 2 472 293
- US-A- 2 498 339
- US-A- 2 841 684
- US-A- 4 402 765
- US-A- 4 530 165
- US-A- 4 600 491
- US-A- 4 772 374
- US-A- 5 070 625
- US-A- 5 245 763
- US-A- 5 972 112

## Beschreibung

Die Erfindung betrifft eine Vorrichtung zur Aushärtung einer aus einem Material, das unter elektromagnetischer Strahlung aushärtet, insbesondere aus einem UV-Lack oder aus einem thermisch aushärtenden Lack, bestehenden Beschichtung eines Gegenstandes, insbesondere einer Fahrzeugkarosserie, nach dem Oberbegriff des Patentanspruchs 1.

Unter UV-Licht aushärtende Lacke werden bisher hauptsächlich zur Lackierung von empfindlichen Gegenständen, beispielsweise Holz oder Kunststoff, eingesetzt. Dort kommt besonders der Vorteil dieser Lacke zum Tragen, dass sie bei sehr niedrigen Temperaturen polymerisiert werden können. Hierdurch wird das Material der Gegenstände vor Zersetzung oder Ausgasung bewahrt. Die Aushärtung von Beschichtungsmaterialien unter UV-Licht besitzt jedoch noch weitere Vorteile, welche dieses Beschichtungsverfahren nunmehr auch für die Anwendung in anderen Gebieten interessant macht. Dabei handelt es sich insbesondere um die kurze Aushärtzeit, die sich insbesondere bei solchen Beschichtungsverfahren, die im kontinuierlichen Durchlauf arbeiten, unmittelbar in einer Verkürzung der Anlagenlänge niederschlägt. Dies ist mit enormen Kosteneinsparungen verbunden. Gleichzeitig kann die Einrichtung, mit welcher die in den Innenraum der Vorrichtung einzubringenden Gase konditioniert werden, verkleinert werden, was ebenfalls zu Kosteneinsparungen beiträgt. Schließlich ist die niedrige Betriebstemperatur auch bei solchen Gegenständen, die an und für sich höhere Aushärttemperaturen vertragen könnten, aus Gründen der Einsparung von Energie, und zwar insbesondere thermischer Energie, von Vorteil.

Viele der Gegenstände, die man gerne mit UV-härtenden Materialien beschichten würde, so z.B. Fahrzeugkarosserien, weisen eine stark unebene, oft dreidimensional gekrümmte Oberfläche auf, so dass es schwierig ist, diese Gegenstände in den Strahlungsbereich eines UV-Strahlers so einzubringen, dass alle Oberflächenbereiche etwa denselben Abstand von dem UV-Strahler aufweisen und die UV-Strahlung etwa unter einem rechten Winkel auf den jeweiligen Oberflächenbereich des Gegenstandes auftrifft.

Bekannte Vorrichtungen ähnlich denen der eingangs genannten Art, wie sie bisher in der Holz- und Druckindustrie eingesetzt werden, sind hierfür ungeeignet, da hier der oder die UV-Strahler unbeweglich angeordnet waren und die Gegenstände von dem Fördersystem in eine mehr oder weniger fixen Orientierung an dem oder den UV-Strahlern vorbeigeführt wurden.

In jüngster Zeit wurden zudem Lacke entwickelt, die bei Wärmeeinwirkung in einer Inertgasatmosphäre unter Ausbildung sehr harter Oberflächen aushärten. Die Wärme kann dabei auf unterschiedliche Weise, so etwa durch Konvektion oder durch Infrarot-Strahler, zugeführt werden. Im letzteren Falle stellen sich ähnliche Probleme, wie sie oben für den Einsatz von Strahlern beschrieben sind. Insbesondere sollten also alle Oberflächenbereiche des zu lackierenden Gegenstandes in etwa dem gleichen Abstand an dem Infrarot-Strahler vorbeigeführt werden.

Eine Vorrichtung der eingangs genannten Art ist aus der US 4 772 374 bekannt geworden. Dort werden Fahrzeugkarosserien an einer Hängevorrichtung durch verschiedene Prozessstationen, unter anderem auch einen Trockner, hindurchgeführt. Der Trockner kann mit IR-Strahlern ausgestattet sein. Die Hängeträger der Hängevorrichtung sind in ihrer Länge verstellbar, jedoch nicht unabhängig voneinander, was die möglichen Bewegungen der Karosserie während des Trocknens einschränkt.

Eine Oberflächenbehandlungsvorrichtung ähnlich derjenigen der eingangs genannten Art geht auch aus der DE 40 33 333 A1 hervor. Die Karosserie kann in einem Behandlungsbad um ihre Achse gedreht werden, bleibt aber in ihrer Längsrichtung horizontal, so dass auch hier die Freiheitsgrad der Karosseriebewegung eingeschränkt sind.

Aufgabe der vorliegenden Erfindung ist es, eine Vorrichtung der eingangs genannten Art so auszugestalten, dass auch Beschichtungen auf kompliziert geformten, stark unebenen Gegenständen, insbesondere Fahrzeugkarosserien, mit gutem Ergebnis ausgehärtet werden können.

Diese Aufgabe wird erfindungsgemäß mit den im Patentanspruch 1 angegebenen Mitteln gelöst.

Erfingdungsgemäß wird ein Fördersystem mit einem Hängewagen eingesetzt, wie es an und für sich bisher schon für die Tauchlackierung von Fahrzeugkarosserien oder anderen Gegenständen eingesetzt wird. Mit der vorliegenden Erfindung wurde erkannt, dass sich mit einem Hängewagen ein Gegenstand um eine quer zum Fahrweg verlaufende Achse schwenken lässt, wenn die Länge der Hängeträger ungleichmäßig und insbesondere gegenläufig zueinander motorisch verändert wird. Dies erlaubt es beispielsweise, bei Überlagerung einer solchen Schwenkbewegung um eine Querachse mit einer Translation des Hängewagens entlang des Fahrweges den Abstand zwischen einem unterhalb des Hängewagens angeordneten Strahler und einer nach unten weisenden Oberfläche des Gegenstandes in etwa konstant zu halten.

Auf diese Weise wird der angehängte Gegenstand gleichmäßig einer Lichtmenge und einer Lichtintensität ausgesetzt, wie sie zur Aushärtung des Materials erforderlich sind. Eine vollständige Aushärtung tritt nämlich nur ein, wenn die elektromagnetische Strahlung einerseits mit einer über einem Schwellenwert liegenden Intensität auf die Beschichtung auftrifft und andererseits diese Intensität auch über einen bestimmten Zeitraum hinweg aufrecht erhalten wird. Bei zu geringer Intensität kommt die Polymerisationereaktion nicht in Gang oder läuft nur unvollständig ab; bei zu kurzer Bestrahlung wird - selbst bei ausreichender Intensität - ebenfalls nur eine unvollständige Aushärtung erzielt.

Dabei ist durch die Steuerung die Länge der Hängeträger derart veränderbar, dass während einer Förderbewegung des Gegenstands an dem mindestens einen Strahler vorbei die pro Flächeneinheit auf das Material auftreffende Menge an elektromagnetischer Strahlung und dessen Intensität jeweils vorgebbare, zur Aushärtung erforderliche Schwellenwerte nicht unterschreiten. Auf diese Weise ist gewährleistet, dass sämtliche nach unten weisenden Oberflächenbereiche des Gegenstandes der gleichen Strahlungsintensität und in etwa der gleichen Menge an Strahlungemenge, d. h. der gleichen Bestrahlung im photometrischen Sinne, ausgesetzt werden.

Eine besonders vorteilhafte Ausfhürungsform der Erfindung zeichnet sich dadurch aus, dass mindestens einer der Hängeträger zwei motorisch unabhängig voneinander aufrollbare Bänder oder Ketten umfasst, die zu beiden Seiten des Gegenstandes an einer den Gegenstand aufnehmenden Tragstruktur angreifen. Die den Gegenstand aufnehmende Tragstruktur wird auf diese Weise an drei oder, wenn beide Hängeträger in dieser Weise ausgeführt sind, an vier Punkten an dem Fahrgestell des Hängewagens aufgehängt. Durch unabhängige Längenveränderung der Bänder oder Ketten lässt sich die Tragstruktur mit dem darauf befestigten Gegenstand nicht nur um eine quer zum Fahrweg verlaufende Achse, sondern auch um eine längs zum Fahrweg verlaufende Achse schwenken. Dies wiederum erlaubt es, auch Seitenflächen des Gegenstandes so gegenüber seitlichen Strahlern auszurichten, dass auch dort alle Oberflächenbereiche im Einwirkungsbereich der von diesen Strahlern erzeugten elektromagnetischen Strahlung gleichmäßig und vollständig ausgehärtet werden.

Bevorzugt ist es ferner, wenn das Fördersystem mehrere Hängewagen umfasst, die jeweils ein eigenes Antriebsaggregat für eine translatorische Bewegung entlang des Fahrweges aufweisen. Auf diese Weise können die Hängewagen unabhängig voneinander die Gegenstände transportieren und an dem mindestens einen Strahler vorbeiführen. Der Fahrweg kann dabei z. B. eine Schiene, zwei Schienen oder auch eine Rollenbahn umfassen, wie dies an sich im Zusammenhang mit derartigen Fördersystemen im Stand der Technik bekannt ist.

Besonders bevorzugt wird eine Ausführungsform der Erfindung, bei welcher die Vorrichtung einen unterhalb des Fahrweges angeordneten und nach oben offenen Behälter aufweist, in dessen Innenraum der Gegenstand unter einer Vergrößerung der Länge der Hängeträger einführbar ist und dessen Innenraum von dem mindestens einen Strahler mit elektromagnetischer Strahlung beaufschlagbar ist. Dieser Behälter sorgt dafür, dass in seitlicher Richtung keine elektromagnetische Strahlung und keine Gase entweichen können, was aus Gesundheitsgründen für das Bedienungspersonal zu vermeiden ist. Bei dieser Ausführungsform der Erfindung entfalten die Hängewagen, die zum Ein- und Austauchen von Gegenständen in Flüssigkeitsbehälter konstruiert sind, ihre Vorteile besonders gut. Insbesondere das Herablassen in einen Behälter lässt sich mit derartigen Hängewagen sehr einfach bewerkstelligen, da auch größere Höhenunterschiede ohne weiteres überbrückt werden können. Der Behälter kann dabei als eigenständiges Teil oder auch als ein entsprechend ausgekleideter Bodenbereich eines Kabinengehäuses o. ä. ausgebildet sein.

Die Anordnung der Strahler an oder im Behälter kann unterschiedlich sein:

So ist es möglich, dass mindestens ein Strahler in eine Wand oder in den Boden des Behälters eingebaut ist. Bei dreidimensional gekrümmten Oberflächen von zu behandelnden Gegenständen wird dabei diejenige Lösung bevorzugt, bei welcher in den gegenüberliegenden, parallel zur Translationsbewegung der Gegenstände verlaufenden Seitenwänden und in mindestens einer der beiden senkrecht zur Translationsbewegung der Gegenstände verlaufenden Stirnwände sowie in den Boden des Behälters mindestens ein Strahler eingebaut ist. Dann lassen sich alle Seiten bzw. Oberflächenbereiche des Gegenstandes von elektromagnetischer Strahlung problemlos erreichen.

Am universellsten einsetzbar ist selbstverständlich diejenige Ausführungsform der Erfindung, bei welcher an allen Wänden und im Boden des Behälters eine Vielzahl von Strahlern angeordnet ist.

Bei den obigen Ausführungsformen, bei denen die Strahler in den Wänden oder in dem Boden des Behälters angeordnet sind, bilden die Strahler im wesentlichen Flächenstrahler.

Es können jedoch auch vorteilhaft Strahler eingesetzt werden, die als linienhafte Strahler ausgestaltet sind. In diesem Falle ist insbesondere eine Ausführungsform der Erfindung vorteilhaft, bei welcher mehrere Strahler in einer U-förmigen Anordnung mit zwei im wesentlichen vertikalen Schenkeln und einer im wesentlichen horizontalen Basis vorgesehen sind. Der zu behandelnde Gegenstand wird hier zwischen den vertikalen Schenkeln des Portalgerüsts sozusagen "hindurchgefädelt".

Die Anordnung der Strahler an den im wesentlichen vertikalen Schenkeln kann an den Verlauf der Seitenflächen des Gegenstandes angepasst sein. Damit kann auch bei gekrümmten Seitenflächen des Gegenstandes eine gleichmäßige und vollständige Aushärtung der Beschichtung auf den Seitenflächen des Gegenstandes erzielt werden.

Wenn die nach unten weisende Oberfläche des Gegenstandes stark gekrümmt ist, so kann es vorteilhaft sein, die Anordnung der Strahler an der im wesentlichen horizontalen Basis an den Verlauf der nach unten weisenden Oberfläche des Gegenstandes anzupassen. Eine solche segmentartige Anordnung der Strahler an der horizontalen Basis ermöglicht es, den Gegenstand so an der Anordnung der Strahler vorbeizuführen, dass deren Abstand von der nach unten weisenden Oberfläche des Gegenstandes weitgehend konstant bleibt.

Besonders bevorzugt ist es, wenn dem Innenraum des Behälters ein Schutzgas zuführbar ist. Das Schutzgas hat primär die Funktion, die Anwesenheit von Sauerstoff im Strahlungsbereich der Strahler zu verhindern, da Sauerstoff insbesondere unter dem Einfluss von UV-Licht in schädliches Ozon umgewandelt werden kann und außerdem den Ablauf der Polymerisationsreaktion beeinträchtigt.

Das Schutzgas sollte schwerer als Luft sein, wie dies beispielsweise bei Kohlendioxid der Fall ist, damit das Schutzgas aus dem oben offenen Behälter nur langsam entweicht. Der Behälter wird somit von dem schweren Schutzgas ähnlich wie von einer Flüssigkeit ausgefüllt.

Vorzugsweise ist in unmittelbarer Nähe des mindestens einen Strahlers ein Einlass für das Schutzgas. Auf diese Weise kann das Schutzgas gleichzeitig eine kühlende Wirkung auf den mindestens einen Strahler ausüben.

Weiter ist es bevorzugt, wenn mindestens einem Strahler auf der dem Gegenstand abgewandten Seite ein beweglicher Reflektor zugeordnet ist. Mit Hilfe des beweglichen Reflektors kann die Richtung der von dem mindestens einen Strahler erzeugten elektromagnetischen Strahlung gezielt beeinflusst werden. Dies erlaubt es, den zur Verfügung stehenden wirkbereich der elektromagnetischen Strahlung zu vergrößern.

Der Behälter kann an mindestens einer Innenfläche mit einer reflektierenden Schicht versehen sein. Hierdurch können Strahler mit geringerer Leistung eingesetzt werden.

Die Reflektionswirkung wird dadurch verstärkt, dass die reflektierende Schicht uneben ist. Die Reflektionen erfolgen unter diesen Umständen unter sehr verschiedenen Winkeln, so dass der Innenraum des Behälters sehr gleichmäßig mit elektromagnetischer Strahlung unterschiedlichster Propagationsrichtungen ausgefüllt ist.

Die Schicht kann beispielsweise aus einer Aluminiumfolie bestehen. Diese hat ein sehr gutes Reflektionsvermögen für elektromagnetische Strahlung und ist zudem sehr preiswert. Unebenheiten können auf einfache Weise dadurch erzeugt werden, indem die Aluminiumfolie zerknittert wird.

Die erfindungsgemäße Vorrichtung sollte ein Kabinengehäuse aufweisen, das ein unkontrolliertes Austreten von Gasen und von elektromagnetischer Strahlung, insbesondere von UV-Licht, unterbindet. Beides wäre für das Bedienungspersonal gesundheitsgefährdend.

Am Ein- und am Auslass zum Kabinengehäuse kann jeweils eine Schleuse für den Hängewagen vorgesehen sein. Diese Schleusen verhindern, dass beim Einfahren und Ausfahren des Hängewagens in das Kabinengehäuse oder aus diesem größere Luftmengen aus der Außenatmosphäre in das Kabinengehäuse gelangen. Außerdem schützen die Schleusen Bedienpersonen vor gesundheitsgefährdender elektromagnetischer Strahlung.

Da sich jedoch auch mit Schleusen das Eindringen von Luft, insbesondere von Sauerstoff in den Innenraum des Kabinengehäuses nicht vollständig unterdrücken lässt, ist zweckmäßigerweise eine Einrichtung zur Entfernung des Sauerstoffes aus der innerhalb des Kabinengehäuses befindlichen Atmosphäre vorgesehen. Diese Einrichtung kann einen Katalysator zur katalytischen Bindung des Sauerstoffes, ein Filter zur Absorption oder auch ein Filter zur Adsorption von Sauerstoff umfassen.

Wenn das Beschichtungsmaterial zunächst noch verhältnismäßig viel Lösemittel enthält, wie dies beispielsweise bei wasserbasierten Lacken der Fall ist, kann die Vorrichtung zur Entfernung des Lösemittels aus dem Material der Beschichtung eine Vorwärmzone aufweisen.

Wenn dagegen pulverförmige Materialien verarbeitet werden sollen, kann die Vorrichtung zur Angelierung dieses pulverförmigen Materials eine entsprechende Vorwärmzone besitzen.

Im Prinzip ist eine manuelle Steuerung des Hängewagens möglich, wenn eine Bedienperson den Bestrahlungsvorgang visuell überwachen kann und die entsprechenden Hub- und Absenkbewegungen in Abhängigkeit von der Außenkontur des bestrahlten Gegenstandes steuert.

Bei einer vorteilhaften Weiterbildung dieser Ausgestaltung ist durch die Steuerung die Länge der Hängeträger derart veränderbar, dass während einer Förderbewegung des Gegenstands an dem mindestens einen Strahler vorbei die pro Flächeneinheit auf das Material auftreffende Menge an elektromagnetischer Strahlung und deren Intensität jeweils vorgebbare, zur Aushärtung erforderliche Schwellenwerte nicht unterschreiten. Auf diese Weise ist gewährleistet, dass sämtliche nach unten weisenden Oberflächenbereiche des Gegenstandes der gleichen Strahlungsintensität und in etwa der gleichen Strahlungsmenge, d. h. der gleichen Bestrahlung im photometrischen Sinne, ausgesetzt werden.

Weiter ist es bei dieser Ausgestaltung der Erfindung bevorzugt, wenn durch die Steuerung die Länge der Hängeträgers derart veränderbar ist, dass während einer Förderbewegung des Gegenständs an dem mindestens einen Strahler vorbei der Abstand in Vertikalrichtung zwischen dem Gegenstand und dem mindestens einen Strahler zumindest annähernd konstant bleibt. Liegt dieser konstante Wert nur geringfügig über dem für die Aushärtung erforderlichen Schwellenwert, so wird eine stärkere "Überbelichtung", die z. B. zu einem Verspröden oder einer Verfärbung führen kann, vermieden.

Bevorzugt ist in diesem Zusammenhang ferner, dass die Steuerung einen Speicher zum Speichern von Raumformdaten des Gegenstandes umfasst. Diese Raumformdaten können der Steuerung beispielsweise von einer übergeordneten Datenverarbeitungsanlage bereitgestellt werden.

Alternativ oder auch aus Kontrollgründen zusätzlich hierzu kann die Vorrichtung eine dem mindestens einen Strahler in Förderrichtung - ggf. auch unmittelbar - vorgelagerte Messstation umfassen, durch die Raumformdaten des Gegenstandes erfassbar sind. Diese Daten können dann zur Bewegungsführung des Gegenstandes vor dem oder den Strahlern verwendet werden.

In einer besonders einfachen Ausführung umfasst die Messstation lediglich eine oder mehrere Lichtschranken, die vorzugsweise in unmittelbarer Nähe des mindestens einen Strahlers angeordnet sind und mit der Steuerung zusammenwirken. Unterbricht der zu bestrahlende Gegenstand eine Lichtschranke, so wird in Echtzeit eine entsprechende Ausweichbewegung des Gegenstands veranlasst.

Eine genauere Erfassung der Raumform ist möglich, wenn die Messstation mindestens einen optischen Abtaster aufweist, der beispielsweise eine Infrarotlichtquelle enthalten kann, durch den der Gegenstand in mindestens einer Richtung scannerartig abtastbar ist.

Eine andere Möglichkeit, die Raumform präzise zu erfassen, bietet die digitale Bildverarbeitung und -erkennung von Videobildern des Gegenstandes. Die Messstation weist dann eine Videokamera und eine Einrichtung zur digitalen Bilderkennung auf.

Ausgangsseitig kann die Vorrichtung zur Vervollständigung der Aushärtung eine Nachwärmzone aufweisen.

Bei Gegenständen mit Hohlräumen kann es zweckmäßig sein, einen weiteren Einlass für Schutzgas innerhalb der eingangsseitigen Schleuse derart anzuordnen, dass die Hohlräume mit Schutzgas durchspült werden, wodurch darin enthaltene Luft verdrängt wird.

Die elektromagnetische Strahlung ist vorzugsweise UV-Licht oder Infrarotstrahlung.

Weitere Merkmale und Vorteile der Erfindung ergeben sich aus der nachfolgenden Beschreibung der Ausführungsbeispiele anhand der Zeichnung. Darin zeigen:
- Figur 1: eine Aushärtvorrichtung zur Aushärtung von UV-Lacken in einem stark vereinfachten und nicht maßstäblichen Längsschnitt;
- Figur 2: eine vergrößerte Darstellung eines Teils der in der Figur 1 gezeigten Aushärtevorrichtung;
- Figur 3: einen Querschnitt entlang der Linie III-III durch einen Teil der in der Figur 1 gezeigten Vorrichtung;
- Figur 4: ein anderes Ausführungsbeispiel für eine Aushärtvorrichtung in einer der Figur 2 entsprechenden Darstellung;
- Figur 5: das Ausführungsbeispiel gemäß der Figur 4 in einer der Figur 3 entsprechenden Darstellung.

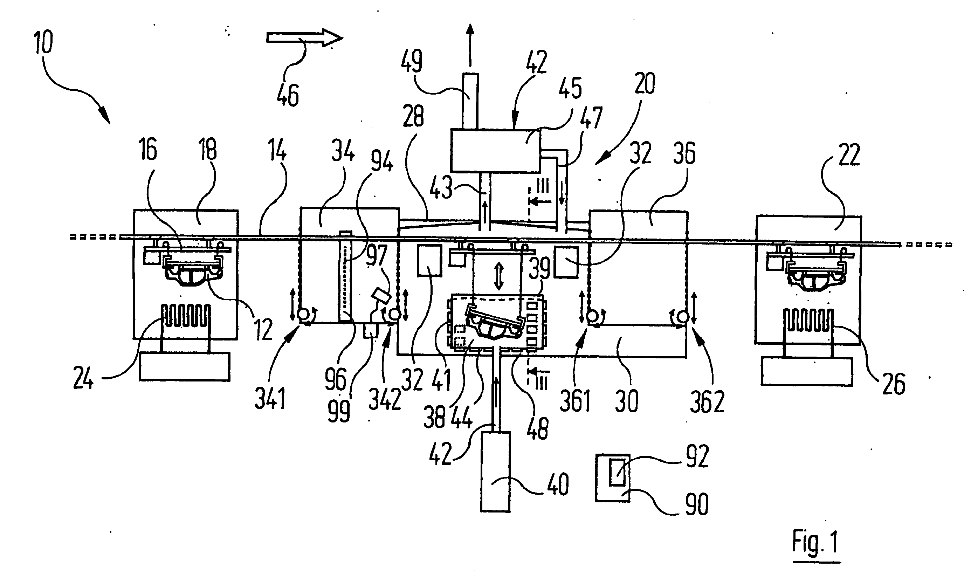

In der Figur 1 ist eine Vorrichtung zur Aushärtung von UV-Lacken in einem stark vereinfachten und nicht maßstäblichen Längsschnitt gezeigt und insgesamt mit 10 bezeichnet. Die beispielhaft dargestellte Aushärtvorrichtung 10 ist Teil einer Lackieranlage, die dazu vorgesehen ist, eine Mehrschichtlackierung auf vormontierte Fahrzeugkarosserien 12 aufzubringen. Die Aushärtvorrichtung 10 umfaßt ein an sich bekanntes Hängebahn-Fördersystem für die Fahrzeugkarosserien 12, das eine oben liegende Schiene 14 und daran angehängte Hängewagen 16 umfaßt. Mit Hilfe dieses Hängebahn-Fördersystems werden die Fahrzeugkarosserien 12 der Aushärtvorrichtung 10 zugeführt und durch die einzelnen Stationen der Aushärtvorrichtung 10 transportiert. Bei diesen Stationen handelt es sich um eine Vorwärmzone 18, eine Bestrahlungsvorrichtung 20 sowie eine Nachwärmzone 22.

Die Vorwärmzone 18 und die Nachwärmzone 22 enthalten jeweils mit 24 bzw. 26 angedeutete und als Heißluftheizungen ausgeführte Heizeinrichtungen. Alternativ kommt eine Beheizung durch IR-Strahler oder mit Hilfe eines Magnetrons zur Erzeugung von Mikrowellen in Frage. Die Vorwärmzone 18 kann je nach Art des Beschichtungsmaterial unterschiedliche Funktionen ausführen. Handelt es sich bei diesem Material um lösemittelbasierte Stoffe, beispielsweise um Wasserlack, werden hier die Lösemittel weitestgehend entfernt. Handelt es sich um Pulvermaterial, so dient die Vorwärmzone 18 dazu, das Pulver anzugelieren und auf diese Weise bereit zur Polymerisation zu machen.

Die Bestrahlungsvorrichtung 20 umfaßt ein Kabinengehäuse 28, das so ausgeführt ist, daß weder ein Gasaustausch mit der Umgebung noch ein Austreten von UV-Licht möglich ist. Um die Vorgänge in einem Innenraum 30 des Kabinengehäuses 28 von außen beobachten zu können, sind an den Seitenwänden des Kabinengehäuses 28 Fenster 32 eingelassen, die für sichtbares Licht durchlässig, für UV-Licht jedoch undurchlässig sind.

Um einen Austausch von Gasen mit der Umgebung zu unter-binden, weist die Bestrahlungsvorrichtung 20 eine Einlaßschleuse 34 und eine Auslaßschleuse 36 auf, die die Hängewagen 16 mit den daran befestigten Fahrzeugkarosserien 12 beim Hineinfahren in den Innenraum 30 bzw. beim Herausfahren daraus passieren müssen. Die Einlaßschleuse 34 und die Auslaßschleuse 36 sind in dem dargestellten Ausführungsbeispiel jeweils als Doppelschleusen mit zwei beweglichen Rolltoren 341, 342 bzw. 361, 362 ausgebildet. Wegen der obenliegenden Schiene 14 werden die Rolltore 341, 342 und 361, 362 von unten aufgerollt, um einen Durchtrittsschlitz für die Schiene 14 möglichst kurz zu halten.

In dem Innenraum 30 des Kabinengehäuses 28 ist ein wannenartiger Behälter 38 angeordnet, der mit einem Schutzgas befüllbar ist, das in einem Gasbehälter 40 gespeichert und über eine in den Boden des Behälters 38 mündende Leitung 42 einleitbar ist. Im dargestellten Ausführungsbeispiel handelt es sich bei dem Schutzgas um Kohlendioxid, da dieses im gasförmigen Zustand schwerer als Luft ist und sich somit in dem oben offenen Behälter 38 ähnlich wie eine Flüssigkeit verhält. Die Menge des über die Leitung 42 zugeführten Schutzgases steht mit der Menge des Schutzgases, das unter anderem über die Einlaß-und Auslaßschleusen 34 bzw. 36 entweicht, in einem dynamischen Gleichgewicht.

Der im wesentlichen quaderförmige Behälter 38 weist an seiner Bodenfläche 44, seinen parallel zu der mit 46 bezeichneten Förderrichtung des Fördersystems verlaufenden Seitenwänden 39 und auch an seinen hierzu senkrechten Stirnwänden 41 eine Vielzahl von UV-Strahlern 48 auf, die UV-Licht in das Innere des Behälters 38 richten. Der Übersicht halber sind die UV-Strahler, die auf der für den Betrachter erkennbaren Seitenwand 39 angeordnet sind, nur teilweise dargestellt. Die Lichtaustrittsflächen der UV-Strahler 48 sind durch ein IR-Filter abgedeckt, so daß die von den UV-Strahlern 48 erzeugte Wärmestrahlung nur zu einem geringen Teil in das Innere des Behälters 38 gelangen kann.

Anstelle einer zentralen Leitung 42 für das Einleiten von Schutzgas kann auch eine Vielzahl von Leitungen vorgesehen sein, die unmittelbar neben den UV-Strahlern 48 an den Wänden des Behälters 38 münden. Das Schutzgas umspült dann die im Betrieb heiß werdenden Teile der UV-Strahler 48. Außerdem kann Schutzgas gezielt auf darin in den Behälter eingetauchte Fahrzeugkarosserien 12 gerichtet werden, um unerwünschte sauerstoffhaltige Restgase zu verdrängen, die unter dem Einfluß von UV-Licht zur Ozonbildung führen und die Polymerisationsreaktion beeinträchtigen können.

Der Innenraum 30 ist mit einem Regenerationskreislauf 42 verbunden, der die Aufgabe hat, Sauerstoff, der über die Fahrzeugkarosserien 12 in den Innenraum 30 eingebracht wird oder beim Öffnen der Einlaßschleuse 34 oder der Auslaßschleuse 36 eindringt, aus der in dem Innenraum 30 herrschenden Atmosphäre zu entfernen. Hierzu wird dem Innenraum 30 über eine Leitung 43 ständig Gas entnommen und beispielsweise über einen Katalysator 45 geführt, der den Sauerstoff katalytisch bindet. Ein Teil dieses Gases wird über eine Leitung 47 wieder in den Innenraum 30 des Kabinengehäuses 28 zurückgegeben, während ein anderer Teil über eine Leitung 49 in die Außenatmosphäre entlassen wird.

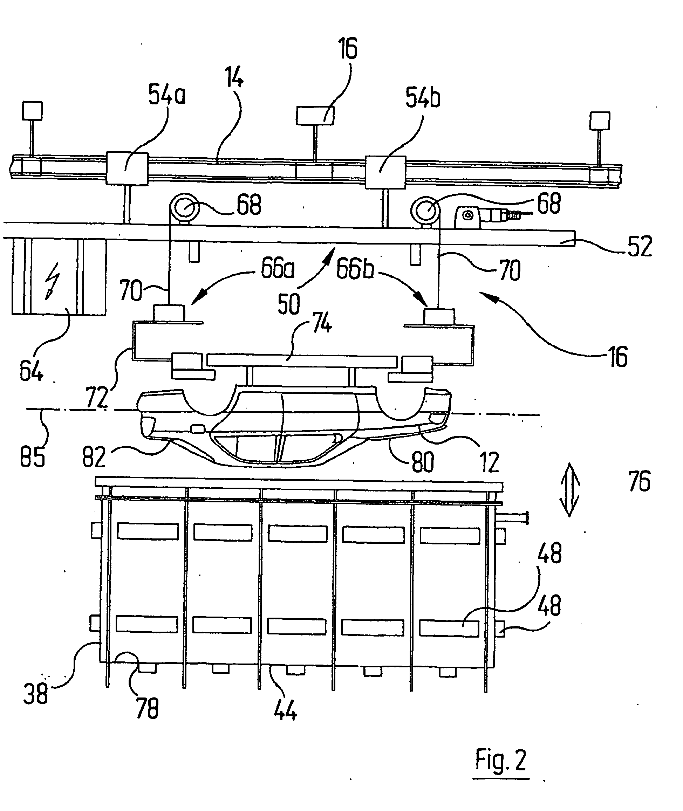

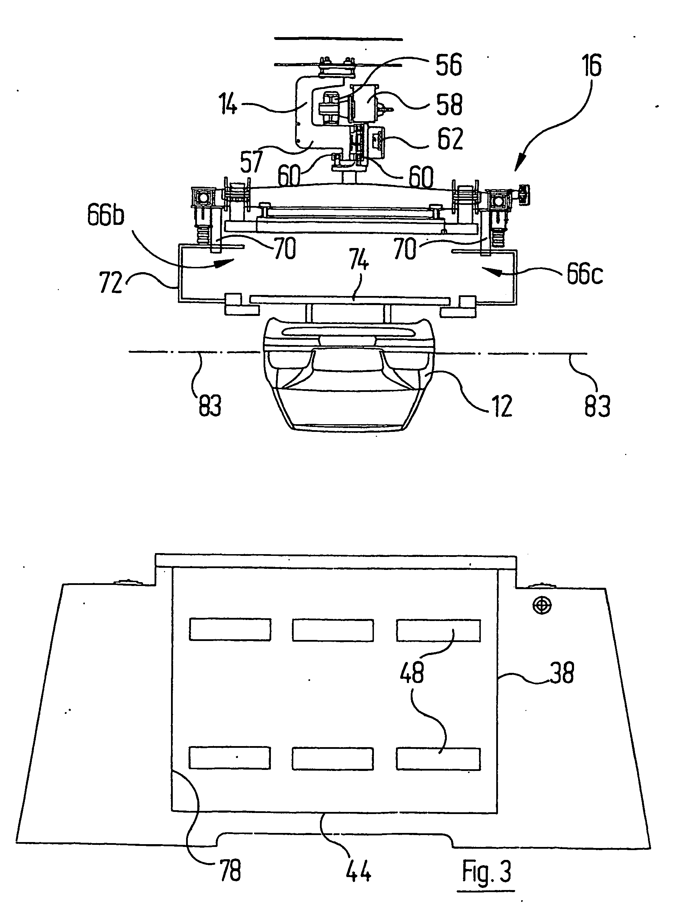

Einzelheiten des Hängebahn-Fördersystems sowie des Behälters 38 werden im folgenden anhand der Figuren 2 und 3 erläutert, die einen Ausschnitt aus dem Innenraum 30 des Kabinengehäuses 28 in einem vergrößerten Längs- bzw. Querschnitt zeigen.

In der Figur 2 ist erkennbar, daß die Schiene 14 des Hängebahn-Fördersystems über Verankerungen 16 an einer nicht näher dargestellten Deckenstruktur befestigt ist. Der Hängewagen 16 umfaßt ein Fahrgestell 50, das seinerseits aus einer Plattform 52 und daran befestigten und sich nach oben erstreckenden Laufwerksgruppen 54a, 54b besteht. Die Laufwerksgruppen 54a, 54b, die besonders gut in der Querschnittsdarstellung der Figur 3 erkennbar sind, enthalten jeweils ein Laufrad 56, das von oben auf einen waagerechten Schenkel 57 der im Querschnitt im wesentlichen C-förmigen Schiene 14 abrollen kann. Das Laufrad 56 ist von einem Antriebsaggregat 58 in Form eines Elektromotors antreibbar. Ein ungewolltes Verkippen des Hängewagens 16 um eine Längsachse wird durch Führungsrollen 60.verhindert, die einen am unteren Schenkel 57 der Schiene 14 ausgebildeten Ansatz 62 umschließen. Zur Stromversorgung des Antriebsaggregats 58 ist an der Plattform 52 des Fahrgestellt 50 ein Akkumulator 64 vorgesehen. Alternativ hierzu kann die Stromversorgung auch über in die Schiene 14 eingelassene Kontaktschienen erfolgen.

Von der Plattform 52 hängen in Längsrichtung vorne und hinten jeweils ein Paar von Hängeträgern herab, von denen in der Figur 2 nur dem Betrachter zugewandte Hängeträger 66a, 66b erkennbar sind. In der Figur 3 ist ein weiterer Hängeträger 66c erkennbar. Jeder Hängeträger 66 umfaßt ein eine motorisch antreibbare Rolle 68, sowie ein darauf aufrollbares Band 70, das aus einem UV-beständigen Material besteht, und einen daran angebrachten Befestigungsbügel 72. Der Befestigungsbügel 72 untergreift eine Tragstruktur 74, an dem die Fahrzeugkarosserie 12 befestigt ist. Bei dieser Tragstruktur 74 kann es sich beispielsweise um einen sog. Skid-Träger handeln, der zum Transport von Fahrzeugkarosserien 12 auf Rollenbahnen verwendet wird. In den Figuren ist die Tragstuktur 74 etwas beabstandet von den Befestigungsbügeln 72 gezeichnet, um deutlich zu machen, daß die Verbindung zwischen dem Befestigungsbügel 72 und der Tragstruktur 74 ohne weiteres lösbar ist.

Aufgrund dieser Aufhängung der Tragstruktur 74 an den vier Eckpunkten mit Hilfe der Befestigungsbügel 72 kann die Fahrzeugkarosserie 12 in der mit einem Pfeil 76 angedeuteten Richtung in der Höhe verfahren, aber auch in der Längsrichtung der Fahrzeugkarosserie 12 und in dessen Querrichtung geschwenkt werden. Hierzu ist es lediglich erforderlich, die Antriebsaggregate für die Rollen 68 unterschiedlich anzusteuern, um auf diese Weise die Länge der Bänder 70 unabhängig zu verändern.

In dem unterhalb der Fahrzeugkarosserie 12 erkennbaren Behälter 38 sind die in die Bodenfläche 44, die Seitenwände 39 und in Stirnwände 41 des Behälters 38 eingelassenen UV-Strahler 48 erkennbar. Die flächig dargestellten UV-Strahler 48 können z. B. ein oder mehrere röhrenförmige Leuchtmittel oder aber auch eine Vielzahl von annähernd punktförmigen Lichtquellen enthalten. Sämtliche Innenflächen des Behälters 38 sind dort, wo sie nicht von Austrittsflächen der UV-Strahler 48 belegt sind, durch eine reflektierende Aluminiumfolie 78 abgedeckt, die zusätzlich beispielsweise durch Knittern oder durch sonstige unregelmäßige Erhebungen uneben gemacht wurde.

Die oben beschriebene Aushärtvorrichtung 10 arbeitet wie folgt:

Im Betrieb sind die UV-Strahler 48 in Funktion, so daß der gesamte Innenraum des Behälters 38 mit UV-Licht durchflutet ist, das durch die an den Innenflächen des Behälters 38 angebrachte zerknitterte Aluminiumfolie 78 zusätzlich in die unterschiedlichsten Richtungen reflektiert und auf diese Weise vergleichmäßigt wird. Die UV-Strahler 48 sind durch das über die Leitung 42 zugeführte gasförmige Kohlendioxid gekühlt. Das auf diese Weise nur unwesentlich vorgewärmte Kohlendioxidgas tritt in den Behälter 38 ein und füllt diesen von unten nach oben auf. Das an der Oberseite aus dem Behälter 38 austretende Kohlendioxid, das in geringfügigem Ausmaße mit Ausgasungen aus dem auf der Fahrzeugkarosserie 12 aushärtenden Lack sowie Ozon gemischt sein kann, gelangt in den Innenraum 30 des Kabinengehäuses 28 und wird von dort über den Auslaß 43 abgesaugt. Eine Absaugung kann auch unmittelbar an dem oberen Rand der Wandungen des Behälters 38 erfolgen.

Es sei angenommen, daß in einer vorgeschalteten Beschichtungseinrichtung der Lackieranlage bereits mehrere Lackschichten aufgetragen worden sind. Bei der obersten Lackschicht handelt es sich um einen Klarlack, der als Pulver auf die bereits vorhandenen Lackschichten aufgebracht ist. Unter dem Einfluß von UV-Licht polymerisiert der Klarlack und härtet auf diese Weise aus. Voraussetzung hierfür ist, daß der pulverförmige Lack zuvor in einen quasi-flüssigen, gelartigen Zustand überführt wird. Hierfür dient die Vorwärmzone 18, in der eine darin angebrachte Fahrzeugkarosserie 12 auf eine Temperatur von etwa 90 °C erhitzt wird. Bei dieser Erweichungstemperatur geht das Pulver in den erwähnten gelartigen Zustand über.

Von der Vorwärmzone 18 wird der Hängewagen 16 mit daran angehängter Fahrzeugkarosserie 12 der Einlaßschleuse 34 zugeführt. Durch sukzessives Öffnen und Schließen der Rollentore 341, 342 der Einlaßschleuse 34 wird der Hängewagen 16 mit der Fahrzeugkarosserie 12 in den Innenraum 30 des Kabinengehäuses 28 eingebracht, ohne daß größere Mengen des darin enthaltenen Schutzgases nach außen dringen können.

Sobald der Hängewagen 16 mit der daran aufgehängten Fahrzeugkarosserie 12 die in den Figuren 2 oder 3 gezeigte Position oberhalb des Behälters 38 erreicht hat, wird durch Abrollen der Bänder 70 von den Rollen 68 die Fahrzeugkarosserie 12 in den Behälter 38 hinabgelassen. Nun erfolgt die eigentliche Aushärtung des nunmehr gelartigen Klarlacks unter Einwirkung des von den UV-Strahlern 48 erzeugten UV-Lichts. Da das Schutzgas die ursprünglich in dem Innenraum 30 vorhandene Luft verdrängt, wird verhindert, daß das UV-Licht den molekularen Luftsauerstoff in Ozon umwandelt, was die Polymerisationsreaktion beeinträchtigen würde.

Damit insbesondere auch die Frontklappe 80 sowie die Heckklappe 82 der Fahrzeugkarosserie 12 die für eine Aushärtung erforderliche Menge an UV-Licht erhält (die Lichtmenge oder -dosis wird in der Photometrie als Bestrahlung mit der Einheit Ws/m² oder J/cm² bezeichnet), wird die in dem Behälter 38 eingetauchte Fahrzeugkarosserie 12 so um eine Querachse 83 (siehe Figur 3) der Fahrzeugkarosserie 12 geschwenkt, daß auch die Frontklappe 80 und anschließend die Heckklappe 82 ausreichend nahe an den in die Bodenfläche 44 des Behälters 38 eingelassenen UV-Strahlern 48 positioniert werden. Hierzu können die Antriebsaggregate für die Rollen 68 z. B. so angesteuert werden, daß die vorderen und hinteren Paare von Bändern 70 gegenläufig verkürzt bzw. verlängert werden.

Da auch die Seitenflächen der Fahrzeugkarosserie 12 stark gewölbt sind, wie dies insbesondere in der Querschnittsdarstellung der Figur 3 erkennbar ist, werden zusätzlich auch die zu beiden Längsseiten der Fahrzeugkarosserie 12 angeordneten Paare von Bändern 70 so in ihrer Länge verändert, daß die Fahrzeugkarosserie 12 eine Schwenkbewegung um ihre Längsachse 85 (siehe Figur 2) ausführt. Auf diese Weise können alle Bereiche der Seitenflächen der Fahrzeugkarosserie 12 ausreichend nahe an die in den Seitenwänden 39 des Behälters 38 eingelassenen UV-Strahlern 48 gebracht werden.

Nach Abschluß des Aushärtvorgangs in dem Behälter 38 wird die Fahrzeugkarosserie 12 wieder angehoben, indem die Bänder 70 gleichmäßig verkürzt werden. Der Hängewagen 16 mit der Fahrzeugkarosserie 12 wird dann über die Auslaßschleuse 36 der Nachwärmzone 22 zugeführt, in der eine Temperatur von etwa 105 °C herrscht. Dort verweilt die Fahrzeugkarosserie 12 etwa fünf bis zehn Minuten lang, in denen die Polymerisationsreaktion vollständig zum Abschluß kommt. Die Zeit und Temperatur kann dabei je nach Beschichtungsmaterial variieren.

Zur Steuerung dieser Vorgänge ist eine zentrale Steuerung vorgesehen, die in der Figur 1 mit 90 angedeutet ist. Die Steuerung 90 steuert über ein Bussystem die einzelnen Stellmotoren innerhalb der Aushärtevorrichtung 10 und insbesondere der Hängewagen 16. Da derartige Steuerungen für Hängewagen vom Prinzip her im Stand der Technik bekannt sind, wird auf die Darstellung von Einzelheiten zu dem Bussystem etc. verzichtet.

In der Steuerung 90 sind in einem Speicher 92 Raumformdaten der Fahrzeugkarosserie 12 hinterlegt, die erforderlich sind, um die Fahrzeugkarosserie 12 in dem Behälter 38 in der vorstehend beschriebenen Weise entlang der Längsachse 85 und der Querachse 83 zu verschwenken. Diese Raumformdaten können z. B. von einer übergeordneten Datenbearbeitungsanlage abgerufen werden, in der für sämtliche die Aushärtvorrichtung 10 durchlaufende Fahrzeugkarosserien 12 einschlägige Daten wie Art und Farbe der Lackierung sowie Karosserietyp- und form hinterlegt sind. Es ist dann lediglich ein Lesegerät erforderlich, welches den Typ der in die Bestrahlungsvorrichtung 20 einlaufenden Fahrzeugkarosserie 12 erkennt, so daß die diesem Typ zugeordneten Raumformdaten abgerufen werden können.

Alternativ oder zu Kontrollzwecken zusätzlich hierzu ist es möglich, die notwendigen Raumformdaten auch mit einer Meßeinrichtung 94 zu ermitteln, die innerhalb der Einlaßschleuse 34 angeordnet ist (siehe Figur 1). Die Me-βeinrichtung 94 weist ein U-förmiges Gerüst auf, an dem eine Vielzahl optischer Abtaster 96 mit Infrarotlichtquellen sowohl in vertikaler Richtung als auch quer zur Förderrichtung 46 befestigt sind. Die optischen Abtaster 96 erfassen scannerartig die Außenkontur der Fahrzeugkarosserie 12 bei deren Durchtritt durch die Meßeinrichtung 94.

Die Meßeinrichtung kann alternativ oder, wie in der Figur 1 gezeigt, auch zusätzlich hierzu eine Videokamera 97 mit einer dieser zugeordneten Bilderkennungseinrichtung 99 aufweisen. Die Videokamera 79 erzeugt von der Fahrzeugkarosserie ein digitales Bild, aus dem in der Bilderkennungseinrichtung durch an sich bekannte Algorithmen die Raumform der Fahrzeugkarosserie abgeleitet wird.

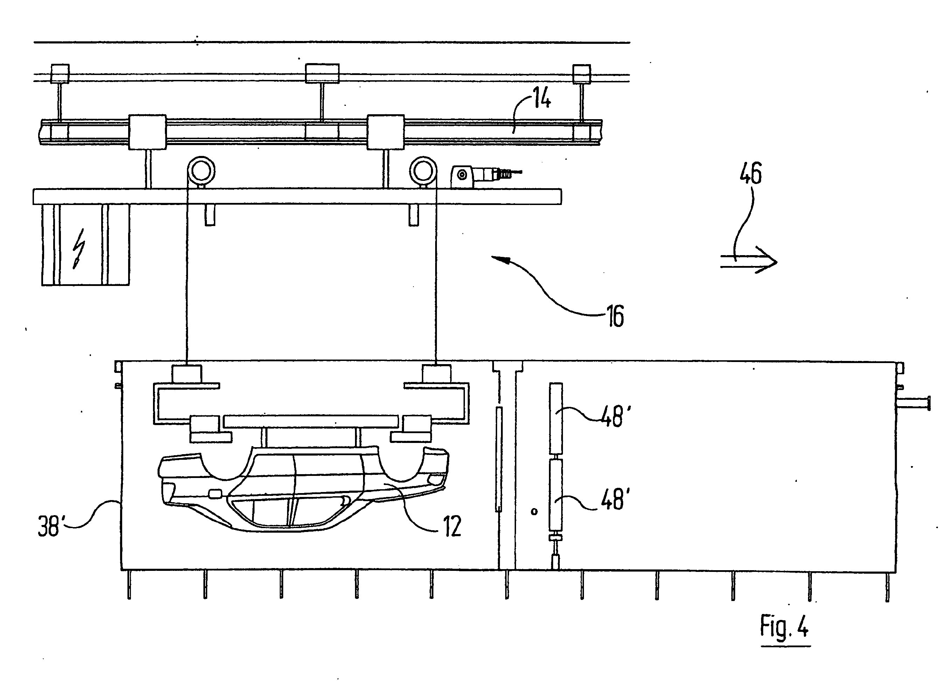

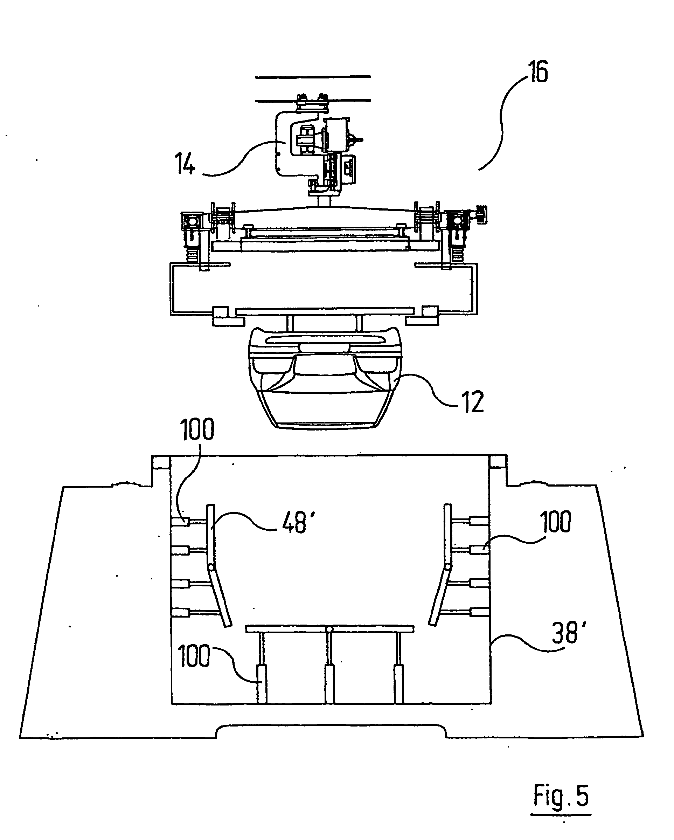

Die Figuren 4 und 5 zeigen ein alternatives Ausführungsbeispiel für den Behälter 38 und die darin angeordneten UV-Strahler 48 in an die Figuren 2 und 3 angelehnten Darstellungen. Das alternative Ausführungsbeispiel unterscheidet sich von dem vorstehend beschriebenen lediglich dadurch, daß UV-Strahler 48 nicht über die gesamte Innenfläche des Behälters 38 verteilt sind, wie dies bei dem in den Figuren 1 bis 3 gezeigten Ausführungsbeispiel der Fall ist. Statt dessen befindet sich hier in einem in Längsrichtung verlängerten Behälter 38' eine U-förmige Anordnung von insgesamt sechs linienhaften UV-Strahlern 48', die paarweise gelenkig miteinander verbunden sind und über hydraulische Verstellelemente 100 an den Querschnitt der Fahrzeugkarosserie 12 angepaßt werden können. Bei diesem Ausführungsbeispiel wird die Fahrzeugkarosserie 12 zunächst ebenfalls in vertikaler Richtung in den Behälter 38' hineingelassen. Anschließend wird der Hängewagen 16 in der Förderrichtung 46 in eine langsame Bewegung in Förderrichtung 46 gesetzt, so daß die an dem Hängewagen 16 aufgehängte Fahrzeugkarosserie 12 zwischen der Anordnung der UV-Strahler 48' hindurchgeführt wird. Falls sich die Querschnittskontur der Fahrzeugkarosserie 12 in deren Längsrichtung signifikant verändert, können die UV-Strahler 48' durch Betätigen der Verstellelemente 100 entsprechend nachgeführt werden.

Alternativ oder zusätzlich zu dieser Art des Ausgleichs besteht jedoch auch hier die Möglichkeit, durch die oben beschriebenen Schwenkbewegungen der Fahrzeugkarosserie 12 um die Längsachse 85 auch die Seitenflächen der Fahrzeugkarosserie 12 optimal gegenüber den UV-Strahlern 48' zu positionieren. Das von den UV-Strahlern 48' erzeugte UV-Licht kann dann etwa unter einem rechten Winkel auf den betreffenden Oberflächenbereich auftreffen.

Bei Bedarf kann die Translationsbewegung des Hängewagens 16 dabei auch unterbrochen oder umgekehrt werden, so daß einzelne Oberflächenbereiche auf der Fahrzeugkarosserie 12 länger bestrahlt werden als andere.

Bei dem in den Figuren 4 und 5 gezeigten Ausführungsbeispiel kann die Meßstation 96 auch in Förderrichtung 46 unmittelbar vor den UV-Strahlern 48' angeordnet sein. Umfaßt die Meßstation 96 in diesem Fall etwa eine oder mehre Lichtschranken, so kann, wenn die Fahrzeugkarosserie 12 in den Erfassungsbereich einer Lichtschranke gelangt; in Echtzeit eine entsprechende Ausweichbewegung der Fahrzeugkarosserie 12 durch Verändern der Länge der Bänder 70 veranlaßt werden.

Die obigen Ausführungsbeispiele werden zum Aushärten von Lacken unter UV-Licht eingesetzt. Sie lassen sich aber auch bei solchen Lacken verwenden, die unter Wärmeeinwirkung, insbesondere in einer Inertgasatmosphäre, also beispielsweise in einer CO₂- oder Stickstoffatmosphäre, aushärten. Es brauchen dann im wesentlichen nur die beschriebenen UV-Strahler durch IR-Strahler ersetzt zu werden. Andere mit dem Wechsel der elektromagnetischen Strahlung verbundene konstruktive Anpassungen sind dem Fachmann bekannt und brauchen hier nicht näher erläutert zu werden.

## Patentansprüche

1. Vorrichtung zur Aushärtung einer aus einem Material,
das unter elektromagnetischer Strahlung aushärtet, insbesondere aus einem UV-Lack oder aus einem thermisch aushärtenden Lack, bestehenden Beschichtung eines Gegenstandes, insbesondere einer Fahrzeugkarosserie (12), mit
a) mindestens einem elektromagnetische Strahlung erzeugenden Strahler (48; 48');
b) einem Fördersystem (14, 16), welches den Gegenstand (12) in die Nähe des Strahlers (48; 48') und von diesem wieder weg führt;
wobei
c) das Fördersystem einen Hängewagen (16) umfasst, der an mindestens einem Fahrweg (14) hängend über den mindestens einen Strahler (48; 48') hinweg translatorisch verfahrbar ist, wobei an einem Fahrgestell (50) des Hängewagens (16) mindestens zwei sich nach unten erstreckende Hängeträger (66) zur hängenden Aufnahme des Gegenstandes (12) angeordnet sind,
**dadurch gekennzeichnet, dass**
d) die Hängeträger (66) am Fahrgestell (50) in Förderrichtung (46) hintereinander angeordnet sind, deren Länge unabhängig voneinander motorisch veränderbar ist, und
e) die Vorrichtung eine Steuerung (90) umfasst, durch welche die Länge der Hängeträger (66) automatisch an die Vertikalabmessungen des Gegenstandes (12) anpassbar ist.

2. Vorrichtung nach Anspruch 1, **dadurch gekennzeichnet,**
**dass** mindestens einer der Hängeträger (66) zwei motorisch unabhängig voneinander aufrollbare Bänder (70) oder Ketten umfasst, die zu beiden Seiten des Gegenstandes (12) an einer den Gegenstand (12) aufnehmenden Tragstruktur (74) angreifen.

3. Vorrichtung nach einem der Ansprüche 1 oder 2, **dadurch gekennzeichnet, dass** das Fördersystem mehrere Hängewagen (16) umfasst, die jeweils ein eigenes Antriebsaggregat (58) für eine translatorische Bewegung entlang des Fahrweges (14) aufweisen.

4. Vorrichtung nach einem der vorhergehenden Ansprüche,
**dadurch gekennzeichnet, dass** sie einen unterhalb des Fahrwegs (14) angeordneten und nach oben offenen Behälter (38) aufweist, in dessen Innenraum der Gegenstand (12) unter einer Vergrößerung der Länge der Hängeträger (66) einführbar ist und dessen Innenraum von dem mindestens einen Strahler (48; 48') mit UV-Licht beaufschlagbar ist.

5. Vorrichtung nach Anspruch 4, **dadurch gekennzeichnet,**
**dass** mindestens ein Strahler (48) in eine Wand oder den Boden (44) des Behälters (38) eingebaut ist.

6. Vorrichtung nach Anspruch 5, **dadurch gekennzeichnet,**
**dass** in den gegenüberliegenden, parallel zur Translationsbewegung der Gegenstände (12) verlaufenden Seitenwänden (39) und in mindestens einer der beiden senkrecht zur Translationsbewegung der Gegenstände verlaufenden Stirnwände (41) oder in den Boden (44) des Behälters (38) mindestens ein Strahler (48) eingebaut ist.

7. Vorrichtung nach Anspruch 5, **dadurch gekennzeichnet,**
**dass** an allen Wänden (39, 41) und in dem Boden (44) des Behälters (38) eine Vielzahl von Strahlern (48) angeordnet ist.

8. Vorrichtung nach einem der vorhergehenden Ansprüche,
**dadurch gekennzeichnet, dass** mehrere Strahler (48') in einer U-förmigen Anordnung mit zwei im wesentlichen vertikalen Schenkeln und einer im wesentlichen horizontalen Basis vorgesehen sind.

9. Vorrichtung nach Anspruch 8, **dadurch gekennzeichnet,**
**dass** die Anordnung der Strahler (48') an den im wesentlichen vertikalen Schenkeln an den Verlauf der Seitenflächen des Gegenstandes (12) angepasat ist.

10. Vorrichtung nach Anspruch 8 oder 9, **dadurch gekennzeichnet, dass** die Anordnung der Strahler (48') an der im wesentlichen horizontalen Basis an den Verlauf der nach unten weisenden Oberfläche des Gegenstandes (12) angepasst ist.

11. Vorrichtung nach einem der Ansprüche 4 bis 10, **dadurch gekennzeichnet, dass** dem Innenraum des Behälters (38) ein Schutzgas zuführbar ist.

12. Vorrichtung nach Anspruch 11, **dadurch gekennzeichnet, dass** das Schutzgas schwerer als Luft, insbesondere Kohlendioxid, ist.

13. Vorrichtung nach Anspruch 11 oder 12, **dadurch gekennzeichnet, dass** in unmittelbarer Nähe des mindestens einen Strahlers (48, 48') ein Einlass für das Schutzgas ist.

14. Vorrichtung nach einem der vorhergehenden Ansprüche,
**dadurch gekennzeichnet, dass** mindestens einem Strahler (48; 48') auf der dem Gegenstand (12) abgewandten Seite ein beweglicher Reflektor zugeordnet ist.

15. Vorrichtung nach einem der Ansprüche 4 bis 14, **dadurch gekennzeichnet, dass** der Behälter (38) an mindestens einer Innenfläche mit einer reflektierenden Schicht (78) versehen ist.

16. Vorrichtung nach Anspruch 15, **dadurch gekennzeichnet, dass** die Schicht (78) uneben ist.

17. Vorrichtung nach einem der Ansprüche 14 oder 15, **dadurch gekennzeichnet, dass** die Schicht aus einer Aluminiumfolie (78) besteht.

18. Vorrichtung nach einem der vorhergehenden Ansprüche, **dadurch gekennzeichnet, dass** sie ein Kabinengehäuse (28) aufweist, das ein unkontrolliertes Austreten von Gasen und von UV-Licht unterbindet.

19. Vorrichtung nach Anspruch 18, **dadurch gekennzeichnet, dass** am Ein- und Auslass des Kabinengehäuses (28) jeweils eine Schleuse (34, 36) für den Hängewagen (16) vorgesehen ist.

20. Vorrichtung nach Anspruch 18 oder 19, **dadurch gekennzeichnet, dass** eine Einrichtung (42) zur Entfernung von Sauerstoff aus der innerhalb des Kabinengehäuses (28) befindlichen Atmosphäre vorgesehen ist.

21. Vorrichtung nach Anspruch 20, **dadurch gekennzeichnet, dass** die Einrichtung (42) zur Entfernung von Sauerstoff einen Katalysator (45) zur katalytischen Bindung des Sauerstoffs aufweist.

22. Vorrichtung nach Anspruch 20 oder 21, **dadurch gekennzeichnet, dass** die Einrichtung (42) zur Entfernung von Sauerstoff ein Filter zur Absorption von Sauerstoff aufweist.

23. Vorrichtung nach einem der Ansprüche 20 bis 22, **dadurch gekennzeichnet, dass** die Einrichtung (42) zur Entfernung von Sauerstoff ein Filter zur Adsorption von Sauerstoff aufweist.

24. Vorrichtung nach einem der vorhergehenden Ansprüche,
**dadurch gekennzeichnet, dass** sie zur Entfernung des Lösemittels aus dem Material der Beschichtung eine Vorwärmzone (18) aufweist.

25. Vorrichtung nach einem der vorhergehenden Ansprüche,
**dadurch gekennzeichnet, dass** sie zur Angelierung von pulverförmigen Material eine Vorwärmzone (18) aufweist.

26. Vorrichtung nach einem der vorhergehenden Ansprüche,
**dadurch gekennzeichnet, dass** durch die Steuerung (90) die Länge der Hängeträger (66) derart veränderbar ist, dass während einer Förderbewegung des Gegenstands (12) an dem mindestens einen Strahler (48; 48') vorbei die pro Flächeneinheit auf das Material auftreffende Menge an UV-Licht und dessen Intensität jeweils vorgebbare, zur Aushärtung erforderliche Schwellenwerte nicht unterschreiten.

27. Vorrichtung nach Anspruch 26, **dadurch gekennzeichnet, dass** durch die Steuerung (90) die Länge der Hängeträgers (66) derart veränderbar ist, dass während einer Förderbewegung des Gegenstands (12) an dem mindestens einen Strahler (48; 48') vorbei der Abstand in Vertikalrichtung zwischen dem Gegenstand (12) und dem mindestens einen Strahler (48; 48') zumindest annähernd konstant bleibt.

28. Vorrichtung nach Anspruch 26 oder 27, **dadurch gekennzeichnet, dass** die Steuerung (90) einen Speicher (92) zum Speichern von Raumformdaten des Gegenstandes (12) umfasst.

29. Vorrichtung nach einem der vorhergehenden Ansprüche,
**dadurch gekennzeichnet, dass** die Vorrichtung eine dem mindestens einen Strahler (48; 48') in Förderrichtung (46) vorgelagerte Messstation (94) umfasst, durch die Raumformdaten des Gegenstandes (12) erfassbar sind.

30. Vorrichtung nach Anspruch 29, **dadurch gekennzeichnet, dass** die Messtation (94) mindestens eine Lichtschranke umfasst.

31. Vorrichtung nach Anspruch 30, **dadurch gekennzeichnet, dass** die Messstation (94) mindestens einen optischen Abtaster (96) umfasst, durch den der Gegenstand (12) zumindest in einer Richtung scannerartig abtastbar ist.

32. Vorrichtung nach Anspruch 31, **dadurch gekennzeichnet, dass** der optische Abtaster (96) eine Infrarotlichtquelle umfasst.

33. Vorrichtung nach einem der Ansprüche 29 bis 32, **dadurch gekennzeichnet, dass** die Messstation eine Videokamera und eine Einrichtung zur digitalen Bilderkennung umfasst.

34. Vorrichtung nach einem der vorhergehenden Ansprüche,
**dadurch gekennzeichnet, dass** sie zur Vervollständigung der Aushärtung eine Nachwärmungszone (22) aufweist.

35. Vorrichtung nach den Ansprüchen 11 und 19, **dadurch**
**gekennzeichnet, dass** innerhalb der einlassseitigen Schleuse (34) ein Einlass für Schutzgas derart angeordnet ist, dass ein in dem Gegenstand (12) vorhandener Hohlraum mit einem Schutzgas durchspült wird.

36. Vorrichtung nach einem der vorhergehenden Ansprüche,
**dadurch gekennzeichnet, dass** die elektromagnetische Strahlung UV-Licht ist.

37. Vorrichtung nach einem der Ansprüche 1 bis 35, **dadurch gekennzeichnet, dass** die elektromagnetische Strahlung IR-Strahlung ist.

## Claims

1. Device for curing a coating of an object, in particular a vehicle body (12), the coating consisting of a material that cures under electromagnetic radiation, in particular of a UV lacquer or a thermally curable lacquer, comprising
a) at least one emitter(48; 48') generating electromagnetic radiation;
b) a conveying system (14, 16) which conveys the object (12) into the vicinity of the emitter (48; 48') and away from it again;
wherein
c) the conveying system comprises a suspended carriage (16) which can be moved in a suspended and translational manner along at least one travel way (14) over the at least one emitter (48; 48'), wherein at least two downwardly extending suspension supports (66) for suspension of the object (12) are arranged on a bogie truck (50) of the suspended carriage (16),
**characterised in that**
d) the suspension supports (66) are arranged on the bogie truck (50) one behind the other in the conveying direction (46), the length of which supports can be changed independently of each other with the aid of a motor, and
e) the device comprises a controller (90) via which the length of the suspension supports (66) can be automatically adapted to the vertical dimensions of the object (12).

2. Device according to claim 1, **characterised in that**
at least one of the suspension supports (66) comprises two belts (70) or chains which can be individually wound with the aid of a motor and which act on either side of the object (12) at a supporting structure (74) receiving the object (12).

3. Device according to either claim 1 or 2, **characterised in that** the conveying system comprises a plurality of suspended carriages (16) which each comprise a separate driving unit (58) for a translatory movement along the travel way (14).

4. Device according to any one of the preceding
claims, **characterised in that** it comprises a container (38) that is open at the top and arranged below the travel way (14), and into the interior of which the object (12) can be introduced by an extension of the length of the suspension support (66) and of which the interior can be subjected to electromagnetic radiation from the at least one emitter (48; 48').

5. Device according to claim 4, **characterised in that**
at least one emitter (48) is fitted in a wall or the base (44) of the container (38).

6. Device according to claim 5, **characterised in that**
at least one emitter (48) is fitted in the opposing side walls (39) extending parallel to the translational movement of the objects (12) and in at least one of the two end walls (41) extending perpendicular to the translational movement of the objects or in the base (44) of the container (38).

7. Device according to claim 5, **characterised in that**
a large number of emitters (48) is arranged on all walls (39, 41) and in the base (44) of the container (38).

8. Device according to any one of the preceding
claims, **characterised in that** a plurality of emitters (48') are provided in a U-shaped arrangement with two substantially vertical legs and a substantially horizontal base.

9. Device according to claim 8, **characterised in that**
the arrangement of the emitters (48') at the substantially vertical legs is adapted to the course of the lateral surfaces of the object (12).

10. Device according to claim 8 or 9, **characterised in**
**that** the arrangement of emitters (48') at the substantially horizontal base is adapted to the course of the downwardly oriented surface of the object (12).

11. Device according to any one of claims 4 to 10,
**characterised in that** a protective gas can be supplied to the interior of the container (38).

12. Device according to claim 11, **characterised in that**
the protective gas is heavier than air, in particular is carbon dioxide.

13. Device according to either claim 11 or 12, **characterised in that** there is an inlet for the protective gas in the immediate vicinity of the at least one emitter (48; 48').

14. Device according to any one of the preceding claims, **characterised in that** at least one emitter (48; 48') on the side remote from the object (12) is associated with a moving reflector.

15. Device according to any one of claims 4 to 14,
**characterised in that** the container (38) is provided on at least one inner surface with a reflective layer (78).

16. Device according to claim 15, **characterised in that** the layer (78) is uneven.

17. Device according to any either of claims 14 or 15,
**characterised in that** the layer consists of aluminium foil (78).

18. Device according to any one of the preceding
claims, **characterised in that** it comprises a cabin housing (28) which prevents the uncontrolled escape of gases and electromagnetic radiation.

19. Device according to claim 18, **characterised in that**
a respective sluice (34, 36) is provided for the suspended carriage (16) at the inlet and outlet of the cabin housing (28).

20. Device according to either claim 18 or 19, **characterised in that** an apparatus (42) is provided for removing oxygen from the atmosphere within the cabin housing (28).

21. Device according to claim 20, **characterised in that**
the apparatus (42) for removing oxygen comprises a catalyst for catalytically binding the oxygen.

22. Device according to either claim 20 or 21, **characterised in that**, for removing oxygen, the apparatus (42) comprises a filter for absorbing oxygen.

23. Device according to any one of claims 20 to 22,
**characterised in that**, for removing oxygen, the apparatus (42) comprises a filter for adsorbing oxygen.

24. Device according to any one of the preceding
claims, **characterised in that** it comprises a preheating zone (18) for removing the solvent from the material of the coating.

25. Device according to any one of the preceding
claims, **characterised in that** it comprises a preheating zone (18) for initial gelling of powdery material.

26. Device according to any one of the preceding
claims, **characterised in that** the length of the suspension supports (66) can be changed by the controller (90) in such a way that, during a conveying movement of the object (12) past the at least one emitter (48; 48'), the quantity of electromagnetic radiation striking the material per unit of area and the intensity thereof do not fall below respectively predeterminable thresholds required for curing.

27. Device according to claim 26, **characterised in that** the length of the suspension supports (66) can be changed by the controller (90) in such a way that, during a conveying movement of the object (12) past the at least one emitter (48; 48'), the spacing in the vertical direction between the object (12) and the at least one emitter (48; 48') is at least approximately constant.

28. Device according to either claim 26 or 27, **characterised in that** the controller (90) comprises a memory (92) for storing three-dimensional shape data of the object (12).

29. Device according to any one of the preceding
claims, **characterised in that** the device comprises a measuring station (94) upstream of the at least one emitter (48; 48') in the conveying direction, by means of which station the three-dimensional shape data of the object (12) can be detected.

30. Device according to claim 29, **characterised in that**
the measuring station (94) comprises at least one light barrier.

31. Device according to claim 30, **characterised in that**
the measuring station comprises at least one optical sampler (94) by which the object (12) can be sampled in a scanner-like manner in at least one direction.

32. Device according to claim 31, **characterised in that**
the optical sampler (96) comprises an infrared light source.

33. Device according to any one of claims 29 to 32,
**characterised in that** the measuring station comprises a video camera and an apparatus for digital image recognition.

34. Device according to any one of the preceding
claims, **characterised in that** it comprises a post-heating zone (22) to complete curing.

35. Device according to claims 11 and 19, **characterised**
**in that**, within the inlet-side sluice (34), an inlet for protective gas is arranged in such a way that a cavity in the object (12) is flushed with a protective gas.

36. Device according to any one of the preceding
claims, **characterised in that** the electromagnetic radiation is UV light.

37. Device according to any one of the claims 1 to 35,
**characterised in that** the electromagnetic radiation is IR radiation.

## Revendications

1. Dispositif dévolu au durcissement d'un revêtement d'un objet, en particulier d'une carrosserie (12) de véhicule, ledit revêtement étant constitué d'un matériau durcissant sous l'action d'un rayonnement électromagnétique, notamment d'une laque UV ou d'une laque thermodurcissable, comprenant
a) au moins un diffuseur (48 ; 48') engendrant un rayonnement électromagnétique ;
b) un système de convoyage (14, 16) guidant l'objet (12) jusqu'à proximité dudit diffuseur (48 ; 48'), puis l'éloignant à nouveau de ce dernier ;
sachant que
c) ledit système de convoyage comprend un chariot (16) en suspension, suspendu à au moins une piste de déplacement (14) et pouvant être animé de mouvements translatoires de franchissement en surplomb du diffuseur (48 ; 48') à présence minimale, au moins deux supports de suspension (66), s'étendant vers le bas, étant disposés sur un châssis de roulement (50) dudit chariot (16) en suspension, afin de recevoir l'objet (12) à l'état suspendu,
**caractérisé par le fait que**
d) les supports de suspension (66), dont la longueur est variable en mode motorisé et de manière autonome, sont agencés en succession dans la direction de convoyage (46) sur le châssis de roulement (50), et
e) ledit dispositif inclut une commande (90) par l'intermédiaire de laquelle la longueur desdits supports de suspension (66) peut être adaptée, en mode automatique, aux cotes verticales de l'objet (12).

2. Dispositif selon la revendication 1, **caractérisé par le fait qu'**au moins l'un des supports de suspension (66) comprend deux bandes (70) ou chaînes, qui peuvent être enroulées indépendamment l'une de l'autre en mode motorisé et sont en prise, de part et d'autre de l'objet (12), avec une structure de support (74) recevant ledit objet (12).

3. Dispositif selon la revendication 1 ou 2, **caractérisé par le fait que** le système de convoyage comprend plusieurs chariots (16) en suspension, respectivement dotés d'un propre groupe d'entraînement (58) en vue d'un mouvement translatoire le long de la piste de déplacement (14).

4. Dispositif selon l'une des revendications précédentes, **caractérisé par le fait qu'**il présente un réceptacle (38) ouvert vers le haut, placé au-dessous de la piste de déplacement (14), et dans l'espace intérieur duquel l'objet (12) peut être inséré moyennant un accroissement de la longueur des supports de suspension (66), ledit espace intérieur du réceptacle pouvant être sollicité par de la lumière UV, sous l'action du diffuseur (48 ; 48') à présence minimale.

5. Dispositif selon la revendication 4, **caractérisé par le fait qu'**au moins un diffuseur (48) est intégré dans une paroi, ou dans le fond (44) du réceptacle (38).

6. Dispositif selon la revendication 5, **caractérisé par le fait qu'**au moins un diffuseur (48) est intégré dans les parois latérales opposées (39) s'étendant parallèlement au mouvement translatoire des objets (12), et dans au moins l'une des deux parois frontales (41) s'étendant perpendiculairement audit mouvement translatoire des objets, ou bien dans le fond (44) du réceptacle (38).

7. Dispositif selon la revendication 5, **caractérisé par le fait qu'**une multiplicité de diffuseurs (48) est implantée sur toutes les parois (39, 41), et dans le fond (44) du réceptacle (38).

8. Dispositif selon l'une des revendications précédentes, **caractérisé par le fait que** plusieurs diffuseurs (48') sont prévus avec agencement configuré en U, comprenant deux branches sensiblement verticales et une base sensiblement horizontale.

9. Dispositif selon la revendication 8, **caractérisé par le fait que** l'agencement des diffuseurs (48') est adapté, au niveau des branches sensiblement verticales, au profil des surfaces latérales de l'objet (12).

10. Dispositif selon la revendication 8 ou 9, **caractérisé par le fait que** l'agencement des diffuseurs (48') est adapté, au niveau de la base sensiblement horizontale, au profil de la surface de l'objet (12) qui est orientée vers le bas.

11. Dispositif selon l'une des revendications 4 à 10, **caractérisé par le fait qu'**un gaz protecteur peut être délivré à l'espace intérieur du réceptacle (38).

12. Dispositif selon la revendication 11, **caractérisé par le fait que** le gaz protecteur est plus lourd que l'air et consiste, notamment, en du dioxyde de carbone.

13. Dispositif selon la revendication 11 ou 12, **caractérisé par le fait qu'**une admission, dédiée au gaz protecteur, se trouve à proximité directe du diffuseur (48 ; 48') à présence minimale.

14. Dispositif selon l'une des revendications précédentes, **caractérisé par le fait qu'**un réflecteur mobile est associé à au moins un diffuseur (48 ; 48'), du côté tourné à l'opposé de l'objet (12).

15. Dispositif selon l'une des revendications 4 à 14, **caractérisé par le fait que** le réceptacle (38) est pourvu d'une couche réflectrice (78) sur au moins une surface intérieure.

16. Dispositif selon la revendication 15, **caractérisé par le fait que** la couche (78) est dépourvue de planéité.

17. Dispositif selon l'une des revendications 14 ou 15, **caractérisé par le fait que** la couche est constituée d'un feuil d'aluminium (78).

18. Dispositif selon l'une des revendications précédentes, **caractérisé par le fait qu'**il présente un boîtier de compartimentage (28) qui interdit une sortie incontrôlée de gaz et de lumière UV.

19. Dispositif selon la revendication 18, **caractérisé par le fait qu'**un sas (34, 36), affecté au chariot (16) en suspension, est respectivement prévu au niveau de l'admission et de la sortie du boîtier de compartimentage (28).

20. Dispositif selon la revendication 18 ou 19, **caractérisé par le fait qu'**un système (42) est prévu pour l'élimination d'oxygène hors de l'atmosphère régnant à l'intérieur du boîtier de compartimentage (28).

21. Dispositif selon la revendication 20, **caractérisé par le fait que** le système (42), affecté à l'élimination d'oxygène, présente un catalyseur (45) dévolu à la liaison catalytique de l'oxygène.

22. Dispositif selon la revendication 20 ou 21, **caractérisé par le fait que** le système (42), affecté à l'élimination d'oxygène, présente un filtre dévolu à l'absorption d'oxygène.

23. Dispositif selon l'une des revendications 20 à 22, **caractérisé par le fait que** le système (42), affecté à l'élimination d'oxygène, présente un filtre dévolu à l'adsorption d'oxygène.

24. Dispositif selon l'une des revendications précédentes, **caractérisé par le fait qu'**il comporte une zone (18) de chauffage préalable, en vue de l'élimination du solvant hors du matériau du revêtement.

25. Dispositif selon l'une des revendications précédentes, **caractérisé par le fait qu'**il comporte une zone (18) de chauffage préalable, en vue d'une amorce de gélification d'un matériau pulvérulent.

26. Dispositif selon l'une des revendications précédentes, **caractérisé par le fait que** la longueur des supports de suspension (66) peut être modifiée, par l'intermédiaire de la commande (90), de façon telle que lors d'un mouvement de convoyage de l'objet (12) passant en regard du diffuseur (48 ; 48') à présence minimale, la quantité de lumière UV venant incider sur le matériau par unité de surface, et l'intensité de ladite lumière, n'excèdent pas négativement des valeurs de seuil pouvant être respectivement prédéfinies, requises en vue du durcissement.

27. Dispositif selon la revendication 26, **caractérisé par le fait que** la longueur des supports de suspension (66) peut être modifiée, par l'intermédiaire de la commande (90), de façon telle que lors d'un mouvement de convoyage de l'objet (12) passant en regard du diffuseur (48 ; 48') à présence minimale, la distance séparant ledit objet (12) dudit diffuseur (48 ; 48') à présence minimale, dans le sens vertical, demeure au moins approximativement constante.

28. Dispositif selon la revendication 26 ou 27, **caractérisé par le fait que** la commande (90) renferme une mémoire (92) destinée à mémoriser des données de configuration spatiale de l'objet (12).

29. Dispositif selon l'une des revendications précédentes, **caractérisé par le fait que** ledit dispositif inclut un poste de mesure (94) implanté en amont du diffuseur (48 ; 48') à présence minimale, dans la direction de convoyage (46), et par lequel des données de configuration spatiale de l'objet (12) peuvent être détectées.

30. Dispositif selon la revendication 29, **caractérisé par le fait que** le poste de mesure (94) inclut au moins une barrière photoélectrique.

31. Dispositif selon la revendication 30, **caractérisé par le fait que** le poste de mesure (94) inclut au moins un palpeur optique (96) par lequel l' objet (12) peut être exploré par balayage, au moins dans une direction.

32. Dispositif selon la revendication 31, **caractérisé par le fait que** le palpeur optique (96) inclut une source de lumière infrarouge.

33. Dispositif selon l'une des revendications 29 à 32, **caractérisé par le fait que** le poste de mesure comprend une caméra vidéo et un système de reconnaissance numérique d'images.

34. Dispositif selon l'une des revendications précédentes, **caractérisé par le fait qu'**il présente une zone de post-chauffage (22), en vue de parachever le durcissement.

35. Dispositif selon les revendications 11 et 19, **caractérisé par le fait qu'**une admission de gaz protecteur se trouve à l'intérieur du sas (34) situé côté admission, de telle sorte qu'une cavité, présente dans l'objet (12), soit balayée à l'aide d'un gaz protecteur.

36. Dispositif selon l'une des revendications précédentes, **caractérisé par le fait que** le rayonnement électromagnétique se présente comme de la lumière UV.

37. Dispositif selon l'une des revendications 1 à 35, **caractérisé par le fait que** le rayonnement électromagnétique est un rayonnement IR.
